# EUROPEAN PATENT APPLICATION

(11) **EP 4 811 071 A1**
(43) Date of publication of application: **23.09.2026**
(21) Application number: 26163999.1
(22) Date of filing: 11.03.2026
(51) Int. Cl.: G05D 16/20, B67C 3/00, F16L 55/053

(54) **A DAMPER ARRANGEMENT**

(30) Priority: 18.03.2025 EP 25164298
(71) Applicant: Tetra Laval Holdings & Finance S.A., 1009 Pully (CH)
(72) Inventor: PERSSON, Johan, 221 86 Lund (SE)
(74) Representative: Tetra Pak Patent Attorneys

(57) **Abstract**

A damper arrangement (1) for reducing pressure pulsations in a fluid line (9) filled with a liquid product (LP) is disclosed. The arrangement comprises a vessel (7) in fluid communication with the fluid line (9), an air supply (21) configured to provide air, and a regulation valve (41) for controlling the passage of air into the vessel (7) to form an air pocket (71). A pressure sensor (5) generates pressure data (P1) indicative of the pressure in the fluid line (9). A control unit (80) is configured to receive the pressure data (P1), determine, based on the received pressure data (P1), a feed pressure (Pf1) at which air is to be supplied, control the air supply (21) to supply air at the feed pressure (Pf1), and control the regulation valve (41) to regulate the passage of air into the vessel (7).

## Description

### Technical Field

The invention relates to liquid processing. More particularly, it is related to a damper arrangement for reducing pressure pulsations in a fluid line, to a homogenizer arrangement equipped with such damper arrangement, and a method for operating the damper arrangement.

### Background

In liquid food processing, maintaining stable pressure conditions in fluid lines is important for consistent product quality and efficient equipment operation. Pressure pulsations arise due to pumps, valves, and other flow-regulating components, leading to vibrations, flow inconsistencies, and potential equipment wear or damage.

Homogenizer arrangements, commonly used in dairy, juice, and plant-based beverages, present particular challenges. Operating at pressures often exceeding 200 bar, homogenizers force liquid through a narrow gap to break down particles and create stable emulsions. However, this process generates pressure fluctuations that, if unmitigated, can reduce efficiency and cause mechanical fatigue in the fluid line and associated equipment.

Damper arrangements counteract pressure pulsations by using air pockets within a vessel to stabilize pressure. Some include automated air replenishment, pressure regulation, and cleaning-in-place (CIP) functionality to maintain hygiene without manual disassembly. However, challenges remain in optimizing damper control to improve efficiency, reduce maintenance, and enhance pressure regulation.

Many existing dampers rely on static air pockets or manual air replenishment, leading to suboptimal damping as air dissolves into the liquid product. Furthermore, current systems often lack real-time air supply adjustments, resulting in inefficient pressure stabilization.

There is thus a need for an improved damper arrangement with an advanced control unit capable of receiving real-time pressure data, determining an optimal feed pressure for air replenishment, and dynamically adjusting air supply and valve control. Such a system would enhance pressure stability, reduce equipment wear, and improve overall processing efficiency.

### Summary

It is an objective of the present invention to at least partly overcome one or more of the above-identified limitations of the prior art. One such objective is to provide an improved damper arrangement that effectively reduces pressure pulsations in a fluid line containing a liquid product by dynamically regulating air supply and pressure levels.

According to a first aspect, a damper arrangement is provided for reducing pressure pulsations in a fluid line filled with a liquid product. The damper arrangement comprises a vessel that is in fluid communication with the fluid line, an air supply configured to provide air, and a regulation valve for regulating the passage of air from the air supply into the vessel to form an air pocket for reducing pressure pulsations in the fluid line. The damper arrangement further comprises a pressure sensor arranged to generate pressure data indicative of a pressure in the fluid line and a control unit configured to receive the pressure data, determine, based on the received pressure data, a feed pressure at which air is to be supplied from the air supply towards the vessel, control the air supply to supply air at the determined feed pressure, and control the regulation valve to regulate the passage of air into the vessel.

This enables the system to determine and use a feed pressure that compensates for pressure losses that may occur when passing air into the vessel during replenishment. As a result, the correct pressure is maintained within the air pocket, optimizing pulsation damping. Additionally, the risk of overfilling the vessel is reduced, improving system efficiency and preventing disruptions in fluid line operation.

The damper arrangement can be used with homogenizers as well as with other processing equipment requiring pressure pulsation damping in a fluid line.

In some embodiments, the control unit is further configured to determine the feed pressure based on a predefined pressure adjustment parameter and the pressure data.

The predefined pressure adjustment parameter may be a formula (algorithm) applied to the generated pressure data indicative of a pressure in the fluid line. For example, the formula may determine the feed pressure as a percentage increase over the measured pressure data. Alternatively, the formula may add a fixed pressure offset to the measured pressure, such as Pf = P1 + ΔP, where ΔP is a predefined pressure offset. Pf = P1 × (1 + X%), where X is a predefined percentage increase. Pf = A × P1 + B, where A and B are predefined coefficients. Pf = max(P1 + ΔP, Pmin), ensuring the feed pressure does not fall below a minimum threshold Pmin. Pf = min(P1 × (1 + X%), Pmax), preventing the feed pressure from exceeding a predefined maximum value Pmax. Here, "n" represents the vessel number and its corresponding pressure and feed pressure, in cases where multiple vessels are used.

Thus, the predefined pressure adjustment parameter may be a pressure offset, for example in the range of 2 bar to 6 bar, preferably in the range of 3 bar to 4 bar. By using a predefined pressure offset, the system ensures consistent and controlled air supply regulation.

In some embodiments, the damper arrangement comprises a supply valve arranged downstream of the regulation valve and upstream of the vessel. The supply valve is configured to open to allow air to enter the vessel for replenishing the air pocket and to close after filling to retain the air pocket inside the vessel until subsequent replenishment is required. This may ensure that the air pocket remains stable over time, preventing excessive air loss and maintaining damping performance.

In some embodiments, an air filter is arranged downstream of the regulation valve and upstream of the vessel for filtering out microorganisms and particles from the air supplied to the vessel. The air filter may be an aseptic air filter, meaning it is designed to prevent microbial contamination by removing bacteria, spores, and other airborne contaminants to a level suitable for sterile or ultra-clean applications. This improves the hygienic conditions of the system, reducing contamination risks.

In some embodiments, a pressure verification sensor is arranged downstream of the air supply and upstream of the regulation valve to monitor the pressure of the air before it enters the regulation valve. The pressure verification sensor generates pressure verification data, which is received by the control unit. The control unit is configured to determine whether the measured pressure deviates from the expected feed pressure beyond a predetermined threshold. By monitoring the pressure at this location, the system ensures that the air supplied to the regulation valve is at the correct pressure, improving accuracy in pressure regulation and enabling early detection of irregularities in the air supply system,

In some embodiments, a further pressure verification sensor is arranged downstream of the regulation valve and upstream of the vessel to monitor the pressure of the air after it has passed through the regulation valve. The further pressure verification sensor generates further pressure verification data, which is received by the control unit. The control unit determines whether this measured pressure deviates from the expected feed pressure beyond a further predetermined threshold. By verifying the pressure after the regulation valve, the system ensures that any pressure losses occurring within the regulation valve or other components do not adversely affect the air pocket formation inside the vessel. This enhances the precision of air replenishment.

In some embodiments, the further pressure verification sensor is arranged downstream of the air filter and upstream of the supply valve. This placement ensures that the pressure of the air passing through the air filter is verified before it enters the supply valve. The further pressure verification sensor may generate pressure verification data, which may be received by the control unit to determine whether the measured pressure deviates from the expected feed pressure beyond a predetermined threshold. By verifying the pressure at this location, the system ensures that any pressure drop across the air filter does not compromise the effectiveness of air replenishment.

In some embodiments, the vessel comprises product level sensors arranged to monitor the liquid level inside the vessel. An upper product level sensor detects when air replenishment is needed, ensuring that the air pocket within the vessel is maintained at an optimal size for pressure pulsation damping. An intermediate level sensor detects when air replenishment should stop, preventing overfilling and ensuring efficient air usage. A lower level sensor monitors whether the liquid level in the vessel has dropped to a point that requires adjusting the operation of a processing apparatus connected to the fluid line. By incorporating these sensors, the damper arrangement can autonomously regulate air replenishment by initiating filling at the appropriate time (detected by the upper sensor) and stopping it when necessary (detected by the intermediate sensor), while also safeguarding downstream equipment that is in fluid communication with the vessel in case the vessel risks being overfilled (detected by the lower sensor) with air that could enter the fluid line.

In some embodiments, the previously discussed vessel, pressure sensor, pressure data and feed pressure may be referred to as a first vessel, first pressure sensor, first pressure data and first feed pressure, respectively. The damper arrangement may then be used for reducing pressure pulsations in a fluid line that comprises a first section feeding the liquid product to a processing apparatus and a second section receiving liquid product that has passed through the processing apparatus. In other words, the fluid line may have a first section and a second section with a processing apparatus in between. The processing apparatus may be a homogenizer.

The first vessel is then in fluid communication with the first section, and the first pressure sensor is arranged to generate pressure data indicative of a pressure in the first section. The damper arrangement further comprises a second vessel that is in fluid communication with the second section, and a second pressure sensor arranged to generate second pressure data indicative of a pressure in the second section. The regulation valve is configured to regulate the passage of air from the air supply into the second vessel to form an air pocket for reducing pressure pulsations in the second section.

The control unit is configured to receive the second pressure data, determine, based on the received second pressure data, a second feed pressure at which air is to be supplied from the air supply towards the second vessel, control the air supply to supply air at the determined second feed pressure, and control the regulation valve to regulate the passage of air into the second vessel. The second vessel, second pressure sensor, second pressure data and second feed pressure may be referred to as a further vessel, further pressure sensor, further pressure data and further feed pressure, respectively. The arrangement of the first and second vessels enables the damper arrangement to reduce pressure pulsations both upstream and downstream of a processing apparatus.

In some embodiments, the air supply is configured to supply air at a pressure of at least 20 bar. In some embodiments, the air supply is configured to supply air at a pressure of up to 30 bar.

In some embodiments, the damper arrangement may comprise a steam supply configured to supply steam through the air filter for sterilization. This ensures that the air supply remains clean and free from contaminants, further enhancing hygiene and reliability.

In some embodiments, the damper arrangement includes a cleaning-in-place (CIP) liquid line connected at a point between the vessel and the regulation valve to allow CIP liquid to flow from the fluid line, through the vessel, and into the CIP liquid line for discharge. This enables efficient automated cleaning, reducing manual maintenance and improving operational efficiency.

According to another aspect, a homogenizer arrangement is provided, comprising a damper arrangement as described above, a homogenizer, and a fluid line. The damper arrangement and the homogenizer are connected to the fluid line for passing liquid product through the vessel of the damper arrangement and through the homogenizer. This enables the homogenizer arrangement to stabilize pressure fluctuations within the homogenizer, optimizing homogenization efficiency while minimizing wear on the homogenizer and associated components.

According to yet another aspect, a method for operating a damper arrangement is provided. The method comprises the steps of, by means of the control unit, receiving pressure data indicative of a pressure in the fluid line, determining, based on the received pressure data, a feed pressure at which air is to be supplied from the air supply towards the vessel, controlling the air supply to supply air at the feed pressure, and controlling the regulation valve to regulate the passage of air into the vessel. This enables a damper arrangement to determine and apply a feed pressure that accounts for pressure losses occurring during air replenishment into the vessel, ensuring consistent and effective air replenishment.

As used herein, "pressure pulsations" may refer to fluctuations or variations in the pressure level within the fluid line that transports the liquid product. These pulsations are essentially undesired, rapid changes in pressure above and below predefined thresholds. They can be caused by various factors, including the operation of pumps (such as a homogenizer), valves opening and closing, changes in flow velocity, or any other disruptions in the fluid flow.

As used herein, "fluid communication" may refer to the configuration or arrangement that allows fluids (liquids or gases) to flow between two or more components without obstructions. It implies that there are no barriers, or that barriers can be opened, such that the fluid is not prevented from transferring and that the components are connected in a way that supports the intended flow dynamics.

As used herein, "regulation valve" refers to a valve configured to control the passage of air from the air supply to the vessel, enabling the formation and maintenance of the air pocket within the vessel.

As used herein, "pressure data" refers to data indicative of the measured pressure at specific points in the fluid line or air supply system. This data is generated by pressure sensors and used by the control unit to determine adjustments to the air supply and regulation valve operations.

As used herein, "air supply" refers to a system or component configured to provide pressurized air at a controlled pressure level. This may include compressors, pressurized air tanks, or other devices capable of delivering air to the damper arrangement for forming and replenishing the air pocket.

The features, advantages, and embodiments described for a particular aspect of the invention may be applied to other aspects where applicable. Further objectives, features, and advantages of the invention will become apparent from the following detailed description and accompanying drawings.

### Drawings

Fig. 1 illustrates a damper arrangement and a homogenizer arrangement.
Fig. 2 is a flowchart illustrating a method for operating a damper arrangement.

### Detailed description

Embodiments will now be described in greater detail with reference to the accompanying drawings, which illustrate some, but not all, embodiments. Indeed, the subject of the present disclosure may be embodied in many different forms and should not be construed as limited to the embodiments set forth herein.

Well-known functions or constructions may not be described in detail for brevity and/or clarity. Unless otherwise defined, all terms (including technical and scientific terms) used herein have the same meaning as commonly understood by one of ordinary skill in the art to which this invention belongs. Like reference signs refer to like elements throughout.

Although the terms first, second, further, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Any methods and steps described herein may be computer-implemented and performed by a control device configured to regulate equipment that executes the steps of the method. The control device may be implemented in hardware or a combination of software and hardware. For example, the control device may comprise processor circuitry, computer memory, and a signal interface. A control program containing computer instructions may be stored in the computer memory and executed by the processor circuitry to perform methods and procedures as described herein, by generating and outputting control signals via the signal interface. The control program may regulate and/or control processing equipment, such as homogenizers or mills, to perform the different steps of the method.

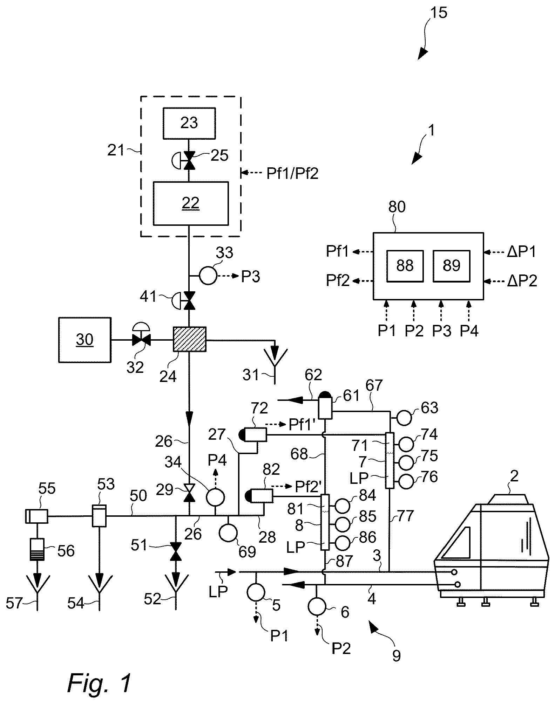

With reference to Fig. 1, a damper arrangement 1 for reducing pressure pulsations in a fluid line 9 filled with a liquid product LP is illustrated. The damper arrangement 1 forms, together with a homogenizer 2, a homogenizer arrangement 15. The damper arrangement 1 is particularly suited for use with a homogenizer 2 but may also be applied to other fluid processing systems where pressure stabilization is required.

The fluid line 9 comprises a first section 3 that leads liquid product LP into the homogenizer 2, and a second section 4 that receives liquid product LP that has passed through the homogenizer 2. The liquid product LP is advantageously a liquid food product.

The damper arrangement 1 comprises a vessel 7 that is in fluid communication with the fluid line 9. Specifically, the vessel 7 is in fluid communication with the first section 3 of the fluid line 9. The vessel 7 contains an air pocket 71, i.e., a volume of air that functions as a buffer to absorb pressure fluctuations in the first section 3 of the fluid line 9, thereby stabilizing the flow and reducing the impact of pulsations caused by processing equipment such as the homogenizer 2.

The vessel 7, hereafter referred to as the first vessel 7, is fluidly connected to the first section 3 of the fluid line 9 via a fluid line connection 77. A further vessel 8, hereafter referred to as the second vessel 8, is fluidly connected to the second section 4 of the fluid line 9 via a fluid line connection 87. The second vessel 8 forms an air pocket 81 for damping pressure pulsations in the second section 4.

In operation, liquid product LP enters the vessels 7, 8 at the lower part of the respective vessel 7, 8. Over time, air in the air pocket 71, 81 dissolves into the liquid product LP, causing the volume of the air pockets 71, 81 to decrease. Thus, the air pockets 71, 81 in the vessels 7, 8 must be replenished (refilled) at regular intervals, for example, when the respective air pocket 71, 81 has reached a predetermined minimal volume.

The damper arrangement 1 has an air supply 21 that is arranged to provide pressurized air to the first vessel 7 and the second vessel 8 for replenishing the air pockets 71, 81. The air supply 21 includes an air inlet 23, which comprises a valve arrangement and a pre-filter to ensure that incoming air meets cleanliness requirements.

The air supply 21 is also equipped with an air booster 22 to supply air at an increased and desired pressure when needed. The air booster 22 is regulated by an air booster control valve 25, ensuring that air is provided at the desired pressure according to either a first feed pressure Pf1 or a second feed pressure Pf2, as will be described further on.

That is, the air supply 21 takes data representing the feed pressures Pf1, Pf2 as input, allowing the air booster control valve 25 to regulate the air booster 22, such that the air supply 21 feeds air at a pressure corresponding to the inputted data representing the feed pressure Pf1 or feed pressure Pf2. The air supply is operable to supply air at a pressure of at least 20 bar. The air supply may be configured to supply air at a pressure of up to 30 bar, to ensure that excess pressure levels are avoided.

The air supply 21 delivers air to the vessels 7, 8 through an air supply line 26, which branches into a first air supply line 27 leading to the first vessel 7 and a second air supply line 28 leading to the second vessel 8. The regulation of air from the air supply 21 to the vessels 7, 8 is managed by a regulation valve 41. The regulation valve 41 is configured to control the passage of air from the air supply 21 into the vessels 7, 8, enabling the formation and maintenance of the air pockets 71, 81.

A first supply valve 72 is arranged downstream of the regulation valve 41 and upstream of the first vessel 7, in the first air supply line 27. The first supply valve 72 is configured to open to allow air to enter the first vessel 7 for replenishing the air pocket 71 therein and to close after filling to retain the air pocket 71 inside the first vessel 7 until subsequent replenishment is required.

A second supply valve 82 is arranged downstream of the regulation valve 41 and upstream of the second vessel 8, in the second air supply line 28. The second supply valve 82 is configured to open to allow air to enter the second vessel 8 for replenishing the air pocket 81 therein and to close after filling to retain the air pocket 81 inside the second vessel 8 until subsequent replenishment is required.

Thus, to replenish the first vessel 7, the regulation valve 41 and the first supply valve 72 must open. To replenish the second vessel 8, the regulation valve 41 and the second supply valve 82 must open.

As will be described, the vessels 7, 8 are generally replenished with air at different pressures. Therefore, the vessels 7, 8 are replenished one at a time, with the first vessel 7 being replenished when the air supply 21 feeds air at the first feed pressure Pf1, and the second vessel 8 being replenished when the air supply 21 feeds air at the second feed pressure Pf2.

Due to pressure losses occurring as the air passes through various components on its way from the air supply 21 to the respective vessel 7, 8, the air pressure supplied to the vessels 7, 8 is lower than the feed pressures Pf1 or Pf2. The actual pressures reaching the vessels 7, 8 are denoted by Pf1' and Pf2', respectively.

An air filter 24 is positioned downstream of the regulation valve 41 and upstream of both the first vessel 7 and the second vessel 8. Specifically, the air filter 24 is positioned downstream of the regulation valve 41 and upstream of the position where the air supply line 26 branches into the first air supply line 27 and the second air supply line 28.

A one-way valve 29 may be arranged intermediate the air filter 24 and the position where the air supply line 26 branches into the first air supply line 27 and the second air supply line 28, downstream the air filter 24. The one-way valve 29 prevents fluid from flowing in the upstream direction towards the air filter 24, thereby protecting the air filter 24.

The air filter 24 is an aseptic air filter that removes microorganisms and particles from the air supplied to the vessels 7, 8. A steam supply 30 is provided to enable sterilization of the air filter 24, ensuring that contaminants are eliminated before air enters the vessels 7, 8. A steam valve 32 is used to regulate the flow of steam through the air filter 24, and a steam trap 31 is arranged downstream of the air filter 24 for receiving the steam. Additionally, a temperature guard 69 and a steam trap 31 may be arranged between the air filter 24 and the steam trap 31, respectively, for monitoring that the steam reaches the desired temperature and for condensing the steam.

A first pressure sensor 5 is arranged to measure the pressure of the liquid product LP in the first section 3 of the fluid line 9, i.e., the first pressure sensor 5 generates first pressure data P1 indicative of a pressure in the first section 3 of the fluid line 9. The first pressure sensor 5 may be a piezoelectric, capacitive, or strain gauge pressure sensor, capable of accurately detecting pressure fluctuations within the fluid line 9. The first pressure sensor 5 may be installed directly on the first section 3 of the fluid line 9 or within a dedicated pressure measurement chamber to ensure precise readings. The first pressure data P1 may be obtained by detecting the force exerted by the liquid product LP against a sensing element, which is then converted into an electrical signal. This signal is transmitted to a control unit 80, where it is processed to determine real-time pressure conditions in the first section 3 of the fluid line 9.

A second pressure sensor 6 is arranged to measure the pressure of the liquid product LP in the second section 4 of the fluid line 9, i.e., the second pressure sensor 6 generates second pressure data P2 indicative of a pressure in the second section 4 of the fluid line 9. The second pressure sensor 6 may be of the same type as the first pressure sensor 5. It may be installed directly on the second section 4 of the fluid line 9 or within a dedicated pressure measurement chamber to ensure accurate readings. The second pressure data P2 may be obtained by detecting the force exerted by the liquid product LP against a sensing element, converting it into an electrical signal. This signal is also transmitted to the control unit 80, where it is processed to determine real-time pressure conditions in the second section 4 of the fluid line 9.

The control unit 80 is arranged and programmed to regulate and control the damper arrangement 1 and receives the first and second pressure data P1, P2 from the sensors 5, 6. Additionally, the control unit 80 may be arranged to control the homogenizer 2. The control unit 80 has a processor 88 and a memory 89, where control programs are stored and executed.

Based on the first and second pressure data P1, P2, the control unit 80 determines the first and second feed pressures Pf1, Pf2 using predefined pressure adjustment parameters ΔP1 and ΔP2 that has been stored in or is transmitted to the control unit 80.

As previously mentioned, the predefined pressure adjustment parameter may be a formula (algorithm) applied to the generated pressure data indicative of a pressure in the fluid line. For example, the formula may determine the feed pressure as a percentage increase over the measured pressure data. Alternatively, the formula may add a fixed pressure offset to the measured pressure, such as:
Pfn = Pn + ΔPn, where ΔPn is a predefined pressure offset.
Pfn = Pn × (1 + X%), where X is a predefined percentage increase.
Pfn = A × Pn + B, where A and B are predefined coefficients.
Pfn = max(Pn + ΔPn, Pmin-n), ensuring the feed pressure does not fall below a minimum threshold Pmin-n.
Pfn = min(Pn × (1 + X%), Pmax-n), preventing the feed pressure from exceeding a predefined maximum value Pmax-n.

In these cases, "n" represents either "1" or "2," i.e., either the first or second pressure data/feed pressure.

When the feed pressure is determined according to the formula Pfn = Pn + ΔPn, the pressure offset ΔPn is in the range of 2 bar to 6 bar, preferably in the range of 3 bar to 4 bar.

Data representing the desired feed pressure Pf1, Pf2 is then transmitted to the air supply 21 to control it so that the correct feed pressure is supplied to the air supply line 26. If the first vessel 7 is to be replenished with air, then the first feed pressure Pf1 is supplied, allowing the first supply valve 72 to open and fill the first vessel 7 with air (while the second supply valve 82 remains closed). If the second vessel 8 is to be replenished with air, then the second feed pressure Pf2 is supplied, allowing the second supply valve 82 to open and fill the second vessel 8 with air (while the first supply valve 72 remains closed). Thus, the control unit 80 can control the control valve 41 to open and close, as well as regulate the valves 72 and 82 to open respectively close.

For the air supplied from the air supply 21, pressure is lost as it passes through the regulation valve 41, the air filter 24, the one-way valve 29, and either the first or second supply valve 72, 82, as applicable. The pressure fed into the first vessel 7 is therefore lower than the initial feed pressure Pf1, which is indicated by the pressure Pf1' in Fig. 1. The same applies to the pressure fed into the second vessel 8, where the resulting pressure Pf2' is lower than the originally fed pressure Pf2.

The control unit 80 also verifies whether the pressure readings P3 and P4 from sensors 33 and 34 deviate from the feed pressure Pf1 or Pf2 beyond predetermined thresholds. By automating air replenishment, pressure verification, and cleaning procedures, the damper arrangement 1 enhances system efficiency, reduces manual maintenance, and ensures consistent damping performance in liquid processing applications.

The damper arrangement 1 comprises a first pressure verification sensor 33 arranged to monitor the air pressure in the air supply system. Specifically, the first pressure verification sensor 33 is positioned downstream of the air supply 21 and upstream of the regulation valve 41. The purpose of the first pressure verification sensor 33 is to generate first pressure verification data P3 indicative of the pressure at this location. By measuring the pressure before the air enters the regulation valve 41, the control unit 80, which receives the first pressure verification data P3, can confirm that the air supply 21 is delivering air at the expected feed pressure Pf1 or Pf2, as applicable. The first pressure verification sensor 33 may be a piezoelectric, capacitive, or strain gauge pressure sensor capable of accurately detecting variations in air pressure.

A second (further) pressure verification sensor 34 is arranged downstream of the regulation valve 41 and upstream of the vessels 7, 8. Specifically, the second pressure verification sensor 34 is arranged upstream of the position where the air supply line 26 branches into the first air supply line 27 and the second air supply line 28. The second pressure verification sensor 34 generates second pressure verification data P4 indicative of the air pressure at this location. The placement of the second pressure verification sensor 34 allows the control unit 80, which receives the second pressure verification data P4, to verify the pressure of the air after it has passed through the regulation valve 41 but before it enters any of the vessels 7, 8. Since pressure losses can occur due to airflow resistance in components such as the regulation valve 41 and the air filter 24, the second pressure verification sensor 34 ensures that the pressure remains within an expected range before entering the vessels 7, 8.

As indicated, the control unit 80 is configured to receive both the first pressure verification data P3 and the second pressure verification data P4. By analyzing the pressure verification data P3 and P4, the control unit 80 determines whether the measured pressure deviates from the expected feed pressure Pf1 or Pf2 beyond a predetermined threshold, which could indicate an issue in the air supply 21 or an obstruction in the air supply line 26. This functionality allows the system to detect potential faults, such as clogged filters, faulty valves, or unexpected pressure drops, ensuring that the vessels 7, 8 receive air at the correct pressure. In some embodiments, the second pressure verification sensor 34 is arranged at a position downstream of the air filter 24 and upstream of the first supply valve 72 or upstream of the position where the air supply line 26 branches into the first air supply line 27 and the second air supply line 28.

The damper arrangement 1 comprises product level sensors arranged to monitor the liquid level inside the first vessel 7. These sensors enable precise control of air replenishment within the vessel 7, ensuring optimal damping performance and preventing operational issues. The sensors are arranged vertically within the first vessel 7, with an upper product level sensor 74 positioned at the uppermost location, an intermediate product level sensor 75 located between the upper and lower sensors, and a lower product level sensor 76 positioned at the lowest monitoring point. Each sensor detects whether the liquid product LP inside the first vessel 7 is in contact with the respective sensor at the location where the respective sensor measures within the vessel 7.

The upper product level sensor 74 is configured to detect when air replenishment is needed (liquid product LP is in contact with the sensor 74). This sensor ensures that the air pocket 71 within the first vessel 7 remains at an acceptable, minimal size for pressure pulsation damping by signaling the control unit 80 to initiate air replenishment when the liquid level in the first vessel 7 rises above the upper sensor's measurement point, making contact with it. The upper product level sensor 74 may be implemented as a capacitive sensor, a conductive probe, or an optical liquid level sensor capable of detecting the presence or absence of liquid product LP.

The intermediate product level sensor 75 is arranged at a height lower than the upper product level sensor 74 and detects when air replenishment should stop (no liquid product LP is in contact with the sensor 75). This sensor prevents overfilling of the first vessel 7 with air, ensuring efficient air usage and maintaining a stable air pocket 71. If the liquid level inside the first vessel 7 falls below the intermediate sensor 75, indicating that the desired air pocket size has been reached, the sensor 75 signals the control unit 80 to close the first supply valve 72, thereby halting further air replenishment. The intermediate sensor 75 may be of the same type as the upper product level sensor 74.

The lower product level sensor 76 is positioned at the lowest monitoring point inside the first vessel 7 and detects whether the liquid level has dropped to a critical level that may impact the operation of a processing apparatus 2 connected to the fluid line 9 (no liquid product LP is in contact with the sensor 76). If the liquid level inside the first vessel 7 falls below the lower level sensor 76, the sensor signals the control unit 80, prompting it to adjust (reduce or halt) the operation of the homogenizer 2. This reduces the risk that air from the vessel 7 could enter the fluid line 9 and potentially damage the homogenizer 2. The lower product level sensor 76 may be of the same type as the upper product level sensor 74.

By incorporating these level sensors, the damper arrangement 1 can autonomously regulate air replenishment of the first vessel 7, maintaining stable pressure conditions in the first section 3 of the fluid line 9.

The second vessel 8 can have a corresponding upper product level sensor 84, intermediate product level sensor 85, and lower product level sensor 86. These sensors operate in the same way as the level sensors for the first vessel 7, detecting liquid contact at their respective measurement points. By doing so, they allow the damper arrangement 1 to autonomously regulate air replenishment and ensure proper damping function of the second vessel 8, maintaining stable pressure conditions in the second section 4 of the fluid line 9.

The control unit 80 receives sensor inputs from various components, including pressure sensors 5 and 6, level sensors 74-76 and 84-86, and temperature guards 63 and 69. Generally, the control unit 80 is configured to regulate and control the damper arrangement 1 and the homogenizer arrangement 2. The control device 80 facilitates the automation and optimization of various process steps by receiving sensor inputs and generating control signals to manage operations of the arrangements.

The control device 80 comprises a processor 88 and a memory 89. The processor 88 is configured to execute control programs stored in the memory 89. These control programs contain instructions for performing the control tasks associated with the processes performed by the damper arrangement 1 and the homogenizer arrangement 2. For instance, the control unit can control the replenishment of air in the vessel 7, 8, based on pressure input P1, P2 from sensors 5, 6 and the predefined pressure adjustment parameters ΔP1, ΔP2. Also, it can verify whether the pressure readings P3, P4 from sensors 33, 34 deviate from the feed pressure Pf1 or Pf2 beyond predetermined thresholds.

The damper arrangement 1 is also equipped with overflow protection functionality. To accomplish this, fluid lines 67 and 68 connect the upper parts of the first vessel 7 and the second vessel 8, respectively, to an overflow protection valve 61, which in turn has an overflow outlet 62. The overflow protection valve 61 can be opened when needed to prevent excessive liquid from accumulating in the vessels 7, 8. Additionally, the overflow protection valve 61 can be used to discharge CIP (cleaning-in-place) liquid that is passed through the vessels 7, 8 from the fluid line 9 during CIP procedures.

A temperature guard 63 can be arranged in the fluid line 67 to verify that liquid passing through the first vessel 7 is at the correct temperature. This ensures proper process conditions, particularly during sterilization or CIP operations.

The damper arrangement 1 further comprises a temperature guard 69 located in the air supply line 26, upstream of the point where the air supply line 26 branches into the first air supply line 27 and the second air supply line 28. The temperature guard 69 is configured to monitor the temperature of steam supplied to the air supply line 26 during cleaning-in-place (CIP) procedures. This is for verifying that the steam used for sterilization reaches the necessary temperature to effectively eliminate contaminants.

Both the temperature guard 69 and the temperature guard 63 in the fluid line 67 are arranged to transmit the measured temperature data, at their respective measurement points, to the control unit 80. The control unit 80 continuously monitors the received temperature data and determines whether the measured values deviate from predetermined acceptable levels. If a temperature deviation is detected, the control unit 80 can take corrective actions, such as adjusting steam flow, triggering alarms, or pausing the CIP process until proper sterilization conditions are met.

A cleaning-in-place (CIP) system is integrated into the damper arrangement 1 to facilitate automated cleaning and sterilization without disassembly. The CIP system includes a CIP liquid line 50 that is connected to the air supply line 26 at a point between the one-way valve 29 and the point where the air supply line 26 branches into the first air supply line 27 and the second air supply line 28. The CIP liquid line 50 allows CIP liquid to flow from the fluid line 9, passing through the first vessel 7 and the second vessel 8, through the valves 72 and 82, and into the CIP liquid line 50 to ensure thorough internal cleaning. The CIP liquid exits through a CIP outlet control valve 53, which regulates the discharge of the CIP liquid. A CIP drain 54 is provided downstream of the CIP outlet control valve 53 to collect and safely discharge the used CIP liquid.

In addition to liquid cleaning, the CIP system also supports steam sterilization. To accomplish this, a steam outlet control valve 55 is arranged in the CIP liquid line 50 to release steam used for sterilization. The released steam is directed into a steam trap 56, where it condenses, and the resulting condensate is discharged through a steam condensate drain 57.

The CIP liquid line 50 also includes an air outlet valve 51, leading to an air outlet 52, to allow for controlled release of air pressure in the air supply line 26 when necessary.

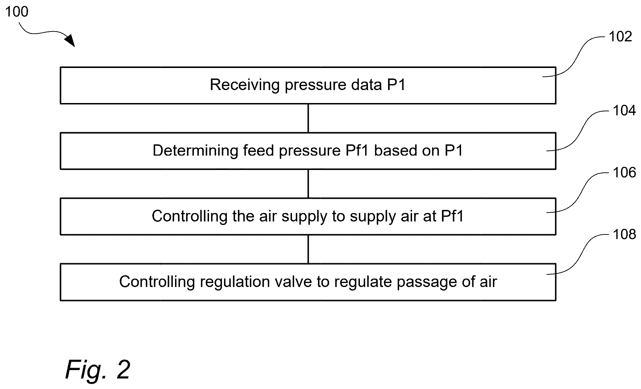

With reference to Fig. 2, a flowchart illustrating a method 100 for operating the damper arrangement 1 is shown. The method 100 is performed by means of the control unit 80 in cooperation with the sensors, air supply 21, valves, and other components of the damper arrangement 1. The method 100 enables automated control of air replenishment to maintain effective pressure pulsation damping in the fluid line 9.

The method 100 comprises a step 102 of receiving pressure data, wherein the control unit 80 receives first pressure data P1 from the first pressure sensor 5, indicative of a pressure in the first section 3 of the fluid line 9. In embodiments where the damper arrangement 1 includes a second vessel 8, the control unit 80 may also receive second pressure data P2 from the second pressure sensor 6, indicative of a pressure in the second section 4 of the fluid line 9.

The method 100 further comprises a step 104 of determining a feed pressure, wherein the control unit 80 determines, based on the received pressure data P1, the feed pressure Pf1 at which air is to be supplied from the air supply 21 towards the first vessel 7. If the second vessel 8 is present, the control unit 80 may also determine the second feed pressure Pf2 based on the second pressure data P2. The determination is performed using the predefined pressure adjustment parameters ΔP1, ΔP2, which may be stored in or transmitted to the control unit 80.

In a subsequent step 106, controlling the air supply, the control unit 80 transmits control signals to the air supply 21 to supply air at the determined feed pressure Pf1. If replenishment of the second vessel 8 is required, the air supply 21 is controlled to supply air at the second feed pressure Pf2.

The method 100 then proceeds with a step 108 of controlling the regulation valve 41, wherein the control unit 80 regulates the operation of the regulation valve 41 to allow air to pass from the air supply 21 into the first vessel 7. If the second vessel 8 is being replenished, the regulation valve 41 is controlled accordingly. The control unit 80 also controls the first supply valve 72 or the second supply valve 82, depending on whether the first or second vessel 7 or 8 is being replenished.

By executing the method 100, the damper arrangement 1 ensures that air is replenished in the vessels 7, 8 at the correct pressure levels, maintaining stable pressure conditions in the fluid line 9 while preventing overfilling or undesired pressure drops.

There is a minor grammatical issue in the first sentence. Here is the corrected version:

In addition, the control unit 80 is configured to perform further control operations, as previously described in connection with the damper arrangement of Fig. 1. These include, for example, verifying pressure conditions by receiving and analyzing pressure verification data P3, P4 from the pressure verification sensors 33, 34 to ensure that the air supply 21 delivers air at the expected pressure. The control unit 80 is also configured to regulate air replenishment based on product level sensors 74, 75, 76, 84, 85, 86 by detecting liquid levels inside the vessels 7, 8 and adjusting air supply accordingly. Furthermore, the control unit 80 receives temperature data from the temperature guards 63, 69 to ensure that CIP and sterilization processes are performed at the correct temperatures. The control unit 80 may also manage overflow protection by monitoring fluid levels in the overflow lines 67, 68 and controlling the overflow protection valve 61 when necessary.

The control unit 80 is a conventional industrial control system designed to regulate and monitor the operation of the damper arrangement 1. It comprises the processor 88, the memory 89, an input/output (I/O) interface, and communication capabilities for interacting with various sensors, valves, and actuators. The processor 88 executes control operations based on instructions stored in the memory 89, which contains program modules in the form of computer programs. These program modules are configured to execute the steps of the method 100, as well as all other control and monitoring functionalities described in connection with Fig. 1.

The communication capabilities of the control unit 80 enable data exchange with external systems, such as supervisory control systems or operator interfaces, for real-time monitoring and remote adjustments. The control unit 80 may be implemented as a programmable logic controller (PLC) or an industrial computer-based control system, depending on the specific requirements of the damper arrangement 1 and homogenizer arrangement 15.

In an alternative embodiment, the damper arrangement may further comprise a first pressure verification sensor 33 arranged at a position downstream of the air supply 21 and upstream of the regulation valve 41, and a second pressure verification sensor 34 arranged at a position downstream of the regulation valve 41 and upstream of the vessel 7. In this embodiment, the control unit 80 is configured to receive pressure verification data generated by the first pressure verification sensor 33 and by the second pressure verification sensor 34, and to compare each measured pressure with the feed pressure Pf1 determined for replenishing the air pocket 71. The control unit 80 may determine whether a deviation beyond a predetermined threshold is present before or after the regulation valve 41, thereby enabling the detection of anomalies such as pressure losses, flow restrictions, malfunctioning valves or unintended leakage within the air supply line 26. This contributes to an improved operational reliability of the damper arrangement 1 by ensuring that air is admitted into the vessel 7 under correctly maintained pressure conditions.

In another embodiment, the vessel 7 may be equipped with an upper product level sensor 74, an intermediate product level sensor 75 and a lower product level sensor 76, each arranged to detect the presence or absence of liquid product LP within the vessel 7 at different vertical positions. The upper product level sensor 74 may signal that replenishment of the air pocket 71 shall commence when liquid product LP reaches the location of the sensor 74. The intermediate product level sensor 75 may indicate that replenishment shall cease when the liquid product LP falls below the location of the sensor 75, ensuring that only a desired volume of air is introduced. The lower product level sensor 76 may detect when the liquid level has dropped to a point where continued operation of a processing apparatus 2 could risk drawing air into the fluid line 9. Upon receiving such a signal, the control unit 80 may automatically reduce the operating capacity of, or temporarily stop, the processing apparatus 2 to prevent damage or unintended introduction of air. The use of the upper, intermediate and lower product level sensors 74, 75, 76 enables autonomous and safe regulation of air replenishment while preventing overfilling or undesired air entry.

In yet another embodiment, the damper arrangement 1 may include an aseptic air filter 24 positioned downstream of the regulation valve 41. The aseptic air filter 24 may be configured to remove microorganisms and particles from the air supplied to the vessel 7. In such an embodiment, a steam supply 30 may be connected to allow the introduction of steam through the aseptic air filter 24 for sterilization, with a steam valve 32 controlling the steam flow and a steam trap 31 arranged to collect condensate. A temperature guard 69 may be arranged upstream of the vessels 7 and 8 in the air supply line 26 to verify that steam used for sterilization reaches suitable temperatures. Furthermore, a CIP liquid line 50 may be fluidly connected between the regulation valve 41 and the vessels 7 and 8, enabling CIP liquid to flow through the vessels 7 and 8 for automated cleaning. A CIP outlet control valve 53 may regulate discharge of the CIP liquid, which may exit via a CIP drain 54. These features allow the damper arrangement 1 to be seamlessly integrated into a CIP or SIP cleaning concept commonly used in hygienic or aseptic processing environments.

In a further embodiment, the damper arrangement 1 may comprise a second vessel 8 arranged downstream of a processing apparatus 2 in a second section 4 of the fluid line 9. The second vessel 8 may contain an air pocket 81 for reducing pressure pulsations downstream of the processing apparatus 2. A second pressure sensor 6 may be arranged to generate pressure data P2 indicative of the pressure in the second section 4, and the control unit 80 may determine a second feed pressure Pf2 based on the received pressure data P2. The air supply 21 may supply air at the second feed pressure Pf2 when the second vessel 8 is replenished, while a second supply valve 82 may be controlled together with the regulation valve 41 to admit air into the second vessel 8. This embodiment enables the coordinated use of a first vessel 7 and a second vessel 8 to reduce pressure pulsations both upstream and downstream of the processing apparatus 2, providing improved process stability.

In an additional embodiment, the determination of the feed pressure Pf1 and Pf2 by the control unit 80 may be executed on the basis of predefined pressure adjustment parameters stored within the memory 89. Such parameters may include a fixed pressure offset ΔP, a linear relationship Pf equal to A multiplied by P plus B, a percentage based increase Pf equal to P multiplied by one plus X percent, or a constraint ensuring that the feed pressure does not fall below a minimum pressure threshold or exceed a maximum pressure threshold. The parameters may be configured so that the feed pressure Pf1 and Pf2 compensates for expected losses occurring when air is transferred through the regulation valve 41, the aseptic air filter 24, the one way valve 29 and the supply valves 72 and 82. This embodiment provides a deterministic and repeatable method for setting the desired feed pressure, improving the reliability and predictability of air pocket formation within the vessels 7 and 8.

In another embodiment, the damper arrangement 1 may further comprise an overflow protection valve 61 connected to overflow lines 67 and 68 from the vessels 7 and 8. When the overflow protection valve 61 is opened, excess liquid or CIP liquid may be discharged via an overflow outlet 62. Such a configuration may prevent the vessels 7 and 8 from reaching excessive fill levels that could impair their damping performance. The overflow protection valve 61 may be controlled by the control unit 80 based on sensor inputs including temperature guards 63 and product level sensors 74, 75, 76, 84, 85 and 86.

In some embodiments, the air supply 21 may comprise an air booster 22 controlled by an air booster control valve 25, allowing the supply of air at a pressure of at least 20 bar and up to 30 bar. This enables the system to generate feed pressures Pf1 and Pf2 suitable for replenishing the air pockets 71 and 81 even when substantial pressure losses occur along the air supply line 26. In such cases, the first pressure verification sensor 33 and the second pressure verification sensor 34 may ensure that the air supply pressure remains accurate both before and after modulation through the regulation valve 41.

The embodiments described herein may be implemented independently or in combination. Where multiple embodiments are combined, the resulting damper arrangement 1 may inherit the functionalities of each constituent embodiment, as long as such combinations remain consistent with the structure, configuration and operation described throughout the application.

In an alternative embodiment, the predefined pressure adjustment parameter used by the control unit 80 may be a stored numerical value or set of values that define a fixed and predetermined relationship between the measured pressure P1 and the resulting feed pressure Pf1. Such a parameter may be selected during system configuration and stored in the memory 89, ensuring that the feed pressure Pf1 is always determined according to a predetermined and reproducible rule rather than by arbitrary selection. The predefined pressure adjustment parameter therefore provides a defined compensatory value that accounts for pressure losses in components including the regulation valve 41, the air filter 24 and the supply valve 72, so that the pressure arriving at the vessel 7 corresponds to the required replenishment pressure. By applying this predetermined parameter, the control unit 80 generates a stable and technically effective feed pressure Pf1, resulting in a consistent air pocket 71 and improved damping performance in the fluid line 9.

In an alternative embodiment, the vessel 7 may be constructed with three vertically spaced level positions fixed by the physical geometry of the vessel 7. The upper product level sensor 74 may be located at the highest permissible liquid level at which the air pocket 71 is considered consumed, the intermediate product level sensor 75 may be positioned below the upper product level sensor 74 at the level corresponding to the intended lower boundary of the air pocket 71 during normal operation, and the lower product level sensor 76 may be positioned further below at the minimum level at which the liquid product LP can still be safely supplied to the processing apparatus 2 without introducing air. The mechanical relationship between the sensors 74, 75 and 76 is thus defined by their fixed vertical separation, ensuring that detection occurs in the correct sequence as the liquid level rises or falls. This arrangement provides the technical effect that air replenishment is initiated and stopped at consistent and predefined liquid positions within the vessel 7, while the lower product level sensor 76 enables protective adjustment of the processing apparatus 2 before air can enter the fluid line 9, thereby maintaining stable damping performance and preventing process disturbances.

In an alternative embodiment, the air supply 21 may be configured to deliver air at a pressure of at least 20 bar. This minimum supply pressure may be selected so that, after passing through components that introduce pressure losses, including the regulation valve 41, the air filter 24 and the supply valve 72, the pressure that reaches the vessel 7 remains sufficiently high to form or replenish the air pocket 71 at the intended operating pressure. The pressure of at least 20 bar therefore represents a predetermined lower limit that ensures the feed pressure Pf1 can be achieved under all normal operating conditions and is not an arbitrary choice. By ensuring that the available supply pressure remains above this defined threshold, the damper arrangement 1 can reliably maintain a stable air pocket 71 and thereby provide consistent damping performance in the fluid line 9.

In an alternative embodiment, the homogenizer 2 may be a processing apparatus configured to subject the liquid product LP to homogenisation, during which pressure is applied to force the liquid product LP through a narrow gap so that dispersed particles or droplets within the liquid product LP are reduced in size and uniformly distributed. The homogenizer 2 may therefore act on the same liquid product LP that flows through the fluid line 9 and through the vessel 7, and the damper arrangement 1 may be used to reduce pressure pulsations both upstream and downstream of the homogenizer 2. By stabilising the pressure conditions at the inlet and outlet of the homogenizer 2, the damper arrangement 1 enables more consistent homogenisation of the liquid product LP, reduces mechanical stress on the homogenizer 2, and improves the overall processing stability.

From the description above, it is evident that, although various embodiments of the invention have been described and illustrated, the invention is not limited to these embodiments. Instead, it can be embodied in other ways within the scope of the subject matter defined in the subsequent claims.

## Claims

1. A damper arrangement (1) for reducing pressure pulsations in a fluid line (9) filled with a liquid product (LP), the damper arrangement (1) comprising
a vessel (7) that is in fluid communication with the fluid line (9),
an air supply (21) configured to provide air,
a regulation valve (41) connecting the air supply (21) to the vessel (7), the regulation valve (41) being configured to regulate the passage of air from the air supply (21) into the vessel (7) to form an air pocket (71) for reducing pressure pulsations in the fluid line (9),
a pressure sensor (5) arranged to generate pressure data (P1) indicative of a pressure in the fluid line (9), and
a control unit (80) configured to
- receive the pressure data (P1),
- determine, based on the received pressure data (P1), a feed pressure (Pf1) at which air is to be supplied from the air supply (21) towards the vessel (7),
- control the air supply (21) to supply air at the feed pressure (Pf1), and
- control the regulation valve (41) to regulate the passage of air into the vessel (7).

2. A damper arrangement (1) according to claim 1, wherein the control unit (80) is configured to
retrieve a predefined pressure adjustment parameter (ΔP1), and
determine the feed pressure (Pf1) based on the predefined pressure adjustment parameter (ΔP1) and the pressure data (P1).

3. A damper arrangement (1) according to claim 2, wherein the predefined pressure adjustment parameter (ΔP1) is a pressure offset, and the control unit (80) is configured to
determine the feed pressure (Pf1) by adding the pressure offset to the pressure data (P1).

4. A damper arrangement (1) according to claim 3, wherein
the pressure offset is in the range of 2 bar to 6 bar, preferably in the range of 3 bar to 4 bar.

5. A damper arrangement (1) according to any preceding claim, comprising a supply valve (72) arranged downstream of the regulation valve (41) and upstream of the vessel (7), the supply valve (72) being configured to open to allow air to enter the vessel (7) for replenishing the air pocket (71), and to close after filling to retain the air pocket (71) inside the vessel (7) until a subsequent replenishment is required.

6. A damper arrangement (1) according to any preceding claim, comprising an air filter (24) arranged downstream of the regulation valve (41) and upstream of the vessel (7), the air filter (24) being arranged for filtering out microorganisms and particles from the air that is supplied to the vessel (7).

7. A damper arrangement (1) according to any preceding claim, comprising a pressure verification sensor (33) arranged to generate pressure verification data (P3) indicative of a pressure at a location downstream of the air supply (21) and upstream of the regulation valve (41), wherein
the control unit (80) is configured to
- receive the pressure verification data (P3),
- determine, based on the received pressure verification data (P3), whether the pressure verification data (P3) deviates from the feed pressure (Pf1) beyond a predetermined threshold.

8. A damper arrangement (1) according to any preceding claim, comprising a further pressure verification sensor (34) arranged to generate further pressure verification data (P4) indicative of a pressure at a location downstream of the regulation valve (41) and upstream of the vessel (7), wherein
the control unit (80) is configured to
- receive the further pressure verification data (P4),
- determine, based on the received further pressure verification data (P4), whether the further pressure verification data (P4) deviates from the feed pressure (Pf1) beyond a further predetermined threshold.

9. A damper arrangement (1) according to claim 5, 6 and 8, wherein the further pressure verification sensor (34) is arranged to generate the further pressure verification data (P4) at a location downstream of the air filter (24) and upstream of the supply valve (72).

10. A damper arrangement (1) according to any preceding claim, wherein the vessel (7) comprises
an upper product level sensor (74) arranged for detecting whether air shall be replenished in the vessel (7),
an intermediate level sensor (75) arranged for detecting whether air replenishment of the vessel (7) shall be stopped, and
a lower level sensor (76) arranged for detecting whether the operation of a processing apparatus (2) connected to the fluid line (9) shall be adjusted.

11. A damper arrangement (1) according to any preceding claim for reducing pressure pulsations in a fluid line (9) that comprises a first section (3) feeding the liquid product (LP) to a processing apparatus (2) and a second section (4) receiving liquid product (LP) that has passed the processing apparatus (2), wherein
the vessel (7) is in fluid communication with the first section (3) and the pressure sensor (5) is arranged to generate the pressure data (P1) indicative of a pressure in the first section (3),
the damper arrangement (1) comprises a further vessel (8) that is in fluid communication with the second section (4), and a further pressure sensor (6) arranged to generate further pressure data (P2) indicative of a pressure in the second section (4),
the regulation valve (41) is configured to regulate the passage of air from the air supply (21) into the further vessel (8) to form an air pocket (81) for reducing pressure pulsations in the second section (4),
the control unit (80) being configured to
- receive the further pressure data (P2),
- determine, based on the received further pressure data (P2), a further feed pressure (Pf2) at which air is to be supplied from the air supply (21) towards the further vessel (8),
- control the air supply (21) to supply air at the further feed pressure (Pf2), and
- control the regulation valve (41) to regulate the passage of air into the further vessel (8).

12. A damper arrangement (1) according to any preceding claim, wherein the air supply (21) is configured to supply air at a pressure of at least 20 bar.

13. A damper arrangement (1) according to any preceding claim, comprising a CIP liquid line (50) connected at a point between the vessel (7) and the regulation valve (41) for allowing CIP liquid to flow from the fluid line (9), through the vessel (7), and into the CIP liquid line (50) for discharge.

14. A homogenizer arrangement (15) comprising
a damper arrangement (1) according to any preceding claim,
a homogenizer (2) configured to homogenise a liquid product (LP) flowing in the fluid line (9) by forcing the liquid product (LP) through a homogenising gap so as to reduce particle size and obtain a uniform dispersion, and
a fluid line (9), wherein
the damper arrangement (1) and the homogenizer (2) are connected to the fluid line (9) for passing liquid product (LP) through vessel (7) of the damper arrangement (1) and through the homogenizer (2).

15. A method (100) for operating a damper arrangement (1) according to any of claim 1 - 13 , the method (100) comprising the steps of, by means of the control unit (80) of the damper arrangement (1):
receiving (102) pressure data (P1) indicative of a pressure in a fluid line (9),
determining (104), based on the received pressure data (P1), a feed pressure (Pf1) at which air is to be supplied from an air supply (21) towards a vessel (7),
controlling (106) the air supply (21) to supply air at the feed pressure (Pf1), and
controlling (108) a regulation valve (41) to regulate the passage of air into the vessel (7).
